# FASCICULE DE BREVET EUROPEEN

(11) **EP 1 853 532 B1**
(45) Date de publication et mention de la délivrance du brevet: **30.06.2010**
(21) Numéro de dépôt: 06709384.9
(22) Date de dépôt: 27.02.2006
(51) Int. Cl.: C04B 35/486

(54) **BILLE FRITTEE À BASE DE ZIRCONE ET D'OXYDE DE CERIUM**
SINTERKUGEL AUF BASIS VON ZIRCONIUMOXID UND CEROXID
ZIRCONIA- AND CERIUM-OXIDE-BASED SINTERED BALL

(30) Priorité: 01.03.2005 FR 0502057
(43) Date de publication de la demande: 14.11.2007
(73) Titulaire: Saint-Gobain Centre de Recherches et d'Etudes Européen, 92400 Courbevoie (FR)
(72) Inventeur: NONNET, Emmanuel, F-84260 Sarrians (FR); KHODAKOVSKAYA, Rimma, 33061 Haifa (IL); LINK, Moshe, 32443 Haifa (IL); YANCU, Marcel, 17000 Nazareth Illit (IL); SCHON, Andrei, 26430 Kyriat Motzkin (IL); HANUS, Eric, 84300 Les Taillades (FR)
(74) Mandataire: Sartorius, Jérome
(86) Numéro de dépôt international: PCT/FR2006/000437
(87) Numéro de publication internationale: WO 2006/092486

(56) Documents cités:
- EP-A- 0 269 108
- US-A- 4 690 910

## Description

L'invention concerne des billes frittées à base de zircone et d'oxyde de cérium, et leur utilisation dans des broyeurs.

De telles billes sont décrites par exemple par US-A-4 690 910.

Une qualité recherchée pour les billes frittées destinées à servir dans des applications de microbroyage et de microdispersion, par exemple de pigments dans des peintures, est leur résistance à l'usure.

On sait que la densité est un paramètre important et il est connu que la densité d'un produit fritté peut être augmentée en augmentant la température de frittage. Cependant, cette augmentation de la température est coûteuse et conduit par tailleurs à une modification de la structure microscopique du produit qui peut nuire à sa performance.

Il existe donc un besoin pour une bille frittée présentant une bonne résistance à l'usure et pouvant être fabriquée par frittage à des températures relativement peu élevées.

Le but de l'invention est de répondre à ce besoin.

Selon l'invention, on atteint ce but au moyen d'une bille frittée présentant l'analyse chimique suivante, en pourcentages en poids et pour un total de 100 %,

| | |
|---|---|
| ZrO₂ + HfO₂ : | 78 - 85 %, |
| CeO₂ : | ≥ 15 % |
| Al₂O₃ : | > 0,1 % |
| Additif : | > 0,1 % |
| Impuretés : | < 1 %, |

l'additif étant choisi parmi MnO, MnO₂, Fe₂O₃, CuO, TiO₂, Y₂O₃, Sb₂O₃, ZnO et leurs mélanges.

Comme on le verra plus en détail dans la suite de la description, la combinaison d'alumine et de l'additif a un effet synergique et permet d'améliorer considérablement la résistance à l'usure. Une bonne résistance à l'usure peut ainsi être obtenue avec des températures de frittage aussi faibles que 1300°C.

De préférence, la bille frittée selon l'invention présente encore une ou plusieurs des caractéristiques optionnelles suivantes :
- La teneur en alumine (Al₂O₃) est supérieure à 0,2 % et/ou inférieure à 1 %, en pourcentage en poids.
- La teneur dudit additif est supérieure à 0,3 %, et/ou inférieure à 0,8 %, en pourcentage en poids.
- La teneur totale d'alumine et dudit additif est supérieure à 0,6 %, de préférence supérieure à 0,7 %, en pourcentage en poids.
- L'additif est MnO et/ou Fe₂O₃.
- La teneur en CeO₂ est inférieure ou égale à 20 % en poids.
- Le rapport entre le pourcentage d'additif et le pourcentage d'alumine est supérieur à 0,5 et/ou inférieur à 2. Il est de préférence supérieur à 0,7 et/ou inférieur à 1,5, et, de préférence encore, est sensiblement égal à 1.

L'invention concerne également l'utilisation d'un mélange de billes selon l'invention dans un broyeur, en particulier pour du microbroyage ou de la microdispersion de pigments.

Dans la présente description, sauf mention contraire, toutes les compositions d'une bille sont données en pourcentages massiques, sur la base de la masse totale de la bille.

Par « impuretés », on entend l'ensemble des autres constituants apportés par les matières premières, par exemple CaO. On considère qu'une teneur totale en impuretés inférieure à 1% ne modifie pas substantiellement les résultats obtenus.

Dans la présente description, le terme « additif » peut signifier MnO, MnO₂, Fe₂O₃, CuO, TiO₂, Y₂O₃, Sb₂O₃, ou ZnO, mais aussi un mélange de ces constituants.

La quantité d'oxyde de cérium CeO₂ est déterminée pour que la bille frittée selon l'invention ne comporte sensiblement pas de zircone sous forme monoclinique. Une quantité minimale de 15% par rapport au poids des autres oxydes de la bille est considérée comme nécessaire. De préférence la quantité de CeO₂ est cependant limitée à 20%, le CeO₂ étant d'un coût très élevé.

Pour fabriquer des billes selon l'invention, on peut procéder de la manière suivante.

On prépare d'abord à température ambiante une suspension aqueuse comportant des poudres de ZrO₂ + HfO₂, CeO₂, Al₂O₃ et, le cas échéant, un ou plusieurs des oxydes suivants : MnO, MnO₂, Fe₂O₃, CuO, TiO₂, Y₂O₃, Sb₂O₃, ZnO. Les sources de ces constituants sont choisies de manière que la teneur totale en impuretés soit inférieure à 1 %, en pourcentage en poids de la matière sèche des constituants de la bille selon l'invention.

La suspension aqueuse présente une teneur en matière sèche comprise entre 50 et 70 %.

Comme cela est bien connu de l'homme du métier, la suspension peut encore contenir les constituants suivants :
- un dispersant, à raison de 0 à 10%; en pourcentage en poids par rapport au poids de la matière sèche ;
- un stabilisant de la viscosité, ou défloculant, à raison de 0 à 3% en pourcentage en poids par rapport au poids de la matière sèche ;
- un modificateur de tension de surface, à raison de 0 à 3% en pourcentage en poids par rapport au poids de la matière sèche ;
- un agent gélifiant, ou « agent de gélification », à raison de 0 à 2% en pourcentage en poids par rapport au poids de la matière sèche.

Les dispersants ou défloculants, modificateurs de tension de surface, et agents gélifiants sont bien connus de l'homme du métier. Il en est de même des électrolytes adaptés pour réagir avec un agent gélifiant déterminé.
A titre d'exemples, on peut citer,
comme dispersant ou défloculant, la famille des polyméthacrylates de sodium ou d'ammonium, la famille des polyacrylates de sodium ou d'ammonium, la famille des acides polyacyliques (sels de sodium ou d'ammonium), ou autres polyélectrolytes, la famille des citrates, par exemple d'ammonium, la famille des phosphates de sodium, et la famille des esters de l'acide carbonique ;
comme modificateur de tension de surface, les solvants organiques tels que certains alcools aliphatiques ;
comme agents gélifiants certains éléments de la famille des polysaccharides naturels.

Tous ces éléments disparaissent pendant les étapes de fabrication ultérieures. Ils ne participent donc pas à la composition des billes selon l'invention.

De préférence, les poudres utilisées, notamment les poudres de ZrO₂ et de CeO₂, présentent un diamètre médian inférieur à 1 micron, de préférence inférieur à 0,5 micron.

Des gouttes de la suspension sont ensuite obtenues par écoulement de la suspension à travers un orifice calibré. Les gouttes sortant de l'orifice tombent dans un bain d'une solution de gélification (électrolyte réactif avec l'agent gélifiant) où elles durcissent après avoir recouvré une forme sensiblement sphérique. Les billes crues ainsi obtenues sont alors extraites du bain, séchées, puis frittées sous air, à pression atmosphérique.

De préférence la durée de frittage est comprise entre 2 et 5 heures.

Les billes frittées obtenues ont classiquement un diamètre compris entre 0,5 et 2,5 mm.

Les exemples non limitatifs suivants sont donnés dans le but d'illustrer l'invention.

Des billes frittées ont été préparées à partir d'une source de zircone (diamètre médian<5µm), d'une source de CeO₂ (diamètre médian<10µm), et d'une source d'alumine (diamètre médian (d50) de 0,4µm). La pureté des sources de zircone et de CeO₂ était supérieure à 98%. Ces poudres ont été mélangées puis cobroyées en milieu humide jusqu'à obtention d'un mélange présentant une granulométrie fine (diamètre médian <1µm, de préférence <0,5 µm). Le mélange a ensuite été séché.

Une suspension aqueuse comportant, en pourcentages en poids de la matière sèche, 7,5% d'un dispersant de type acide polyacrylique, 1,95 % de n butanol (modificateur de tension de surface), 1% du défloculant de type ester d'acide carbonique (stabilisant de la viscosité), et 1% d'un agent gélifiant, à savoir un polysaccharide de la famille des alginates, a ensuite été préparée à partir de ce mélange.

Un broyeur à boulets a été utilisé pour cette préparation de manière à obtenir une bonne homogénéité de la suspension : Une solution contenant l'agent gélifiant a d'abord été formée. Ensuite ont été ajoutés l'additif et l'alumine, puis la poudre de ZrO₂/HfO₂ et de CeO₂, puis le dispersant, puis le modificateur de tension de surface et enfin de l'eau en quantité suffisante pour permettre un bon mélange. Le mélange obtenu a été agité 8 heures. Puis le défloculant a été ajouté et le mélange a été agité 0,5 heure. Enfin de l'eau a été ajoutée en une quantité déterminée pour obtenir une suspension aqueuse à 65% en matière sèche et une viscosité, mesurée au viscosimètre Brookfield, inférieure à 8500cP. Le pH de la suspension était alors d'environ 9.

La suspension a été forcée à travers un trou calibré et à un débit permettant d'obtenir après frittage des billes d'environ 1,2 mm dans le cadre de cet exemple. Les gouttes de suspension tombaient dans un bain de gélification à base d'un électrolyte, sel de cation divalent ou trivalent, réactif avec l'agent gélifiant. Les billes crues sont collectées, lavées pour éliminer l'excédent de réactifs, puis séchées à 90°C pour éliminer l'humidité. Les billes sont ensuite transférées dans un four de frittage où elles sont portées à la température voulue pendant 4h à une vitesse de 5°C/h.

Deux séries de tests ont été effectuées sur des billes frittées présentant différentes compositions et obtenues selon le procédé qui vient d'être décrit. Dans la première série de tests, la température de frittage a été maintenue constante à 1300°C et on a observé l'influence de la composition des billes sur leur densité, indépendamment de la température de frittage. Dans la deuxième série de tests, la température de frittage a été réglée de manière que toutes les billes testées présentent une densité sensiblement identique. On a ainsi pu observer l'influence de la composition des billes sur le taux d'usure, indépendamment de la densité.

On évalue la résistance à l'usure en plaçant, dans un broyeur de type attritif à disque de 1 litre, 770 grammes de billes frittées dans une suspension aqueuse contenant 10% massique d'une poudre céramique adaptée pour simuler l'application. On ajuste ensuite et on maintient la vitesse de rotation de manière à ce que la vitesse périphérique soit de 10m/s pendant 80 heures. On mesure ensuite la perte de poids des billes. Le taux d'usure, donné en pourcentage, correspond au rapport entre la différence de poids des billes avant et après broyage et celui des billes avant broyage.

Le tableau 1 suivant résume les résultats obtenus.

**Tableau 1**

| Essai | Composition (% en poids) | | | Densité des billes frittées à 1300°C (g/cm³) | Test d'usure | |
|---|---|---|---|---|---|---|
| | Al₂O₃ | Additif | | | taux (%) | densité des billes testées (g/cm³) |
| | | Taux (% en poids) | nature | | | |
| 1 | 0,75 | 0,00 | | 6,03 | 0,91 | 6,176 |
| 2 | 0,00 | 0,50 | MnO | 5,96 | ND | |
| 3 | 0,65 | 0,10 | MnO | 6,13 | 0,65 | 6,161 |
| 4 | 0,38 | 0,37 | MnO | 6,17 | 0,49 | 6,173 |
| 5 | 0,25 | 0,50 | MnO | ND | 0,57 | 6,182 |
| 6 | 0,15 | 0,60 | MnO | 6,15 | ND | |
| 7 | 0,50 | 0,50 | MnO | 6,14 | ND | |
| 8 | 0,00 | 0,50 | MnO₂ | 5,99 | 1,06 | 6,114 |
| 9 | 0,65 | 0,10 | MnO₂ | 6,12 | 0,73 | 6,183 |
| 10 | 0,10 | 0,65 | Fe₂O₃ | 6,20 | 0,62 | 6,185 |
| 11 | 0,65 | 0,10 | CuO | 6,19 | 0,84 | 6,155 |

| | | | | | | |
|---|---|---|---|---|---|---|
| ND : « Donnée non disponible » | | | | | | |

Les compositions du tableau 1 comportent également 16,5 % de CeO₂, une teneur en impuretés inférieure à 1% et un complément à 100% en ZrO₂ + HfO₂.

La première série de tests du tableau 1 permet de constater que la présence d'alumine dans les billes de l'invention résulte en une densité plus élevée pour une température de frittage donnée. La densité est d'autant plus élevée que la composition comporte en outre un additif choisi parmi MnO, MnO₂, Fe₂O₃ et CuO. Les densités les plus élevées sont obtenues avec les additifs CuO et Fe₂O₃.

La deuxième série de tests du tableau 1 permet de constater que le taux d'usure, mesuré pour des billes de différentes compositions présentant une densité sensiblement identique, est significativement amélioré lorsque le composition comprend, outre de l'alumine, au moins un additif choisi parmi MnO, MnO₂, Fe₂O₃ et CuO. De manière surprenante, l'utilisation simultanée d'alumine et d'au moins un additif choisi parmi MnO, MnO₂, Fe₂O₃ et CuO permet d'obtenir des résultats bien meilleurs que la valeur moyenne des résultats obtenus avec un ajout de seulement de l'alumine ou avec un ajout de seulement l'additif. L'alumine et l'additif agissent donc en synergie.

La meilleure résistance à l'usure est obtenue avec MnO et Fe₂O₃, qui sont les additifs préférés. La composition 4 est préférée entre toutes.

De préférence, la teneur totale en additif, en pourcentage en poids, est supérieure ou égale à 0,2 %, de préférence 0,3 %, de préférence 0,5 %.

De préférence, le rapport entre le pourcentage d'additif et le pourcentage d'alumine est compris entre 0,5 et 2, de préférence entre 0,7 et 1,5. De préférence ce rapport est sensiblement égal à 1.

De préférence, la composition comporte MnO comme unique additif. De préférence encore, la teneur en alumine, en pourcentage en poids, est supérieure ou égale à 0,2 %, de préférence 0,3 %.

Comme cela apparaît clairement à présent, l'invention fournit une bille frittée présentant une bonne résistance à l'usure et pouvant être fabriquée par frittage à des températures relativement peu élevées.

Bien entendu, l'invention n'est pas limitée aux exemples et modes de réalisation décrits ci-dessus. En particulier, d'autres systèmes de gélification conviennent pour fabriquer une bille céramique selon l'invention. Ainsi, US 5,466,400, FR 2 84 24 38 et US 4,063,856 décrivent des procédés sol-gel applicables. FR 2 84 24 38 et US 4,063,856 utilisent un système de gélification proche de celui décrit ci-dessus (à base d'alginate) alors que US 5,466,400 en décrit un très différent.

## Revendications

1. Bille frittée présentant l'analyse chimique suivante, en pourcentages en poids et pour un total de 100 %,
| | |
|---|---|
| ZrO₂ + HfO₂ : | 78 - 85 %, |
| CeO₂ : | ≥ 15 %, |
| Al₂O₃ : | > 0,1 %, |
| Additif : | > 0,1 %, |
| Impuretés: | < 1 %, |
l'additif étant choisi parmi MnO, MnO₂, Fe₂O₃, CuO, TiO₂, Y₂O₃, Sb₂O₃, ZnO et leurs mélanges.

2. Bille frittée selon la revendication 1, **caractérisée en ce que** la teneur en alumine (Al₂O₃) est supérieure à 0,2 % et/ou inférieure à 1 %, en pourcentage en poids.

3. Bille frittée selon l'une quelconque des revendications précédentes, **caractérisée en ce que** la teneur dudit additif est supérieure à 0,3 % et/ou inférieure à 0,8 %, en pourcentage en poids.

4. Bille frittée selon l'une quelconque des revendications précédentes, **caractérisée en ce que** la teneur totale d'alumine et dudit additif est supérieure à 0,6 %, de préférence supérieure à 0,7 %, en pourcentage en poids.

5. Bille frittée selon l'une quelconque des revendications précédentes, **caractérisée en ce que** le rapport entre le pourcentage d'additif et le pourcentage d'alumine est supérieur à 0,5 et/ou inférieur à 2.

6. Bille frittée selon l'une quelconque des revendications précédentes, **caractérisée en ce que** le rapport entre le pourcentage d'additif et le pourcentage d'alumine est supérieur à 0,7 et/ou inférieur à 1,5.

7. Bille frittée selon l'une quelconque des revendications précédentes, **caractérisée en ce que** le rapport entre le pourcentage d'additif et le pourcentage d'alumine est sensiblement égal à 1.

8. Bille frittée selon l'une quelconque des revendications précédentes, **caractérisée en ce que** l'additif est MnO et/ou Fe₂O₃.

9. Bille frittée selon l'une quelconque des revendications précédentes, **caractérisée en ce que** la teneur en CeO₂ est inférieure ou égale à 20 % en poids.

10. Utilisation, dans un broyeur, d'un mélange de billes selon l'une quelconque des revendications précédentes.

## Claims

1. A sintered bead presenting the following chemical analysis, in percentages by weight and for a total of 100%:
· ZrO₂ + HfO₂: 78% - 85%;
· CeO₂: ≥ 15%;
· Al₂O₃: > 0.1%;
· additive: > 0.1%;
· impurities: < 1%;
the additive being selected from MnO, MnO₂, Fe₂O₃, CuO, TiO₂, Y₂O₃, Sb₂O₃, ZnO, and mixtures thereof.

2. A sintered bead according to claim 1, **characterized in that** the content of alumina (Al₂O₃) is greater than 0.2% and/or less than 1%, in percentage by weight.

3. A sintered bead according to any one of the preceding claims, **characterized in that** the content of said additive is greater than 0.3% and/or less than 0.8%, in percentage by weight.

4. A sintered bead according to any one of the preceding claims, **characterized in that** the total content of alumina plus said additive is greater than 0.6%, preferably greater than 0.7%, in percentage by weight.

5. A sintered bead according to any one of the preceding claims, **characterized in that** the ratio between the percentage of the additive and the percentage of the alumina is greater than 0.5, and/or less than 2.

6. A sintered bead according to any one of the preceding claims, **characterized in that** the ratio between the percentage of the additive and the percentage of the alumina is greater than 0.7 and/or less than 1.5.

7. A sintered bead according to any one of the preceding claims, **characterized in that** the ratio between the percentage of the additive and the percentage of the alumina is substantially equal to 1.

8. A sintered bead according to any preceding claim, **characterized in that** the additive is MnO and/or Fe₂O₃.

9. A sintered bead according to any one of the preceding claims, **characterized in that** the content of CeO₂ is less than or equal to 20% by weight.

10. The use, in a grinder, of a mixture of beads according to any preceding claim.

## Patentansprüche

1. Sinterkugel aufweisend die folgende chemische Analyse in Masseprozent und für einen Gesamtwert von 100%:
| | |
|---|---|
| ZrO₂ + HfO₂: | 78-85%, |
| CeO₂: | ≥ 15%, |
| Al₂O₃: | > 0,1%, |
| Additiv: | > 0,1%, |
| Unreinheiten: | < 1%, |
das Additiv ist gewählt aus MnO, MnO₂, Fe₂O₃, CuO, TiO₂, Y₂O₃, Sb₂O₃, ZnO und ihren Gemischen.

2. Sinterkugel nach Anspruch 1, **dadurch gekennzeichnet, dass** der Gehalt von Aluminiumoxid (Al₂O₃) größer als 0,2% und/oder kleiner als 1% in Gewichtsprozent ist.

3. Sinterkugel nach einem beliebigen der vorherigen Ansprüche, **dadurch gekennzeichnet, dass** der Gehalt an genanntem Additiv größer als 0,3% und/oder kleiner als 0,8% in Gewichtsprozent ist.

4. Sinterkugel nach einem beliebigen der vorherigen Ansprüche, **dadurch gekennzeichnet, dass** der Gesamtgehalt an Aluminiumoxid und an genanntem Additiv größer als 0,6%, vorzugsweise größer als 0,7% in Gewichtsprozent ist.

5. Sinterkugel nach einem beliebigen der vorherigen Ansprüche, **dadurch gekennzeichnet, dass** das Verhältnis von dem Prozentsatz des Additivs zu dem Prozentsatz des Aluminiumoxids größer als 0,5 und/oder kleiner als 2 ist.

6. Sinterkugel nach einem beliebigen der vorherigen Ansprüche, **dadurch gekennzeichnet, dass** das Verhältnis von dem Prozentsatz des Additivs zu dem Prozentsatz des Aluminiumoxids größer als 0,7 und/oder kleiner als 1,5 ist.

7. Sinterkugel nach einem beliebigen der vorherigen Ansprüche, **dadurch gekennzeichnet, dass** das Verhältnis von dem Prozentsatz des Additivs zu dem Prozentsatz des Aluminiumoxids in etwa gleich 1 ist.

8. Sinterkugel nach einem beliebigen der vorherigen Ansprüche, **dadurch gekennzeichnet, dass** das Additiv MnO und/oder Fe₂O₃ ist.

9. Sinterkugel nach einem beliebigen der vorherigen Ansprüche, **dadurch gekennzeichnet, dass** der Gehalt von CeO₂ kleiner oder gleich 20% in Gewichtsprozent ist.

10. Verwendung eines Gemischs aus Kugeln, nach einem beliebigen der vorherigen Ansprüche, für eine Mühle.
